# EUROPEAN PATENT APPLICATION

(11) **EP 1 886 557 A1**
(43) Date of publication of application: **13.02.2008**
(21) Application number: 06118758.9
(22) Date of filing: 10.08.2006
(51) Int. Cl.: A01K 27/00, A01K 15/02

(54) **A pet training device**

(71) Applicant: Funky Junky INC., Pasadena CA 91107 (US)
(72) Inventor: Liao, Ronglai Room 202 Block.1, Guangdong (CN)
(74) Representative: Sierzputowska, Iwona

(57) **Abstract**

An electrostatic pet training device including a collar (1), a leash (2), and a holding unit (3) is provided. A discharge member at the holding unit capable of discharging high voltage low current is connected to a plurality of electrodes (53,54) by a plurality of wires (51,52) embedded in the leash connected between the collar and the holding unit. The plurality of electrodes formed at the inner surface of the collar is capable of generate high voltage low current electrostatic shock at the pets' neck. Masters can therefore restrain pets from performing inappropriate behaviors by triggering the discharge member at the holding unit. After long term usage, pets will develop good habits.

## Description

### FIELD OF THE INVENTION

The present invention relates to the field of pet training devices and, more specifically, to a pet training device for restraining pets from bad behaviors.

### BACKGROUND OF THE INVENTION

Pets are very important to family; walking the pets has become a daily routine to pet owners. Very too often, people travel with their pets besides walk them. In order to restraining pets from bad behaviors, such as pissing in prohibited location, harassing or even attacking people, pet owners usually confine pets close to them by leashes. However, this commonly used restraining method does not control pets well enough, let along training. Therefore, electronic pet training devices have been utilized.

The electronic pet training devices is characterized in that an electronic training device coupled with remote control is physically fixed onto a pet, the training device is capable of generating buzz or electrical shock, and thereby achieve the pet restraining and training purpose. Although, this type of electronic training device can effectively restrain pets from performing bad behaviors, the training device is effective only when the pets are within the remote control range. It would be difficult to keep the pets closely round their masters.

It is also noted that the remote controls can easily interfere each other. Particularly, when several remote controls for the pet training devices are used within the same control range, adverse operation may occur. Moreover, the structure of this type of electronic pet training device is very complicated. Usually, battery is required for operations. The high production and operation cost also prevent it from being widely used and marketed.

### SUMMARY

Accordingly, it is an object of the present invention to provide a pet training device including a collar, a leash, and a holding unit without the disadvantages of the prior pet training devices. The pet training device of the present invention can keep pets close to their masters in a certain distance, and effectively restrain pets from bad behaviors.

It is another object of the present invention to provide an electrostatic pet training device including a collar, a leash, and a holding unit. The pet training device of the present invention having simple structure can be conveniently operated without battery.

The pet training device provided by the present invention includes a collar, a leash connected to one end of the collar, and a holding unit connected to the other end of the leash. The pet training device further includes a discharge member that discharges high voltage low current. Electrodes connected to the discharge member are formed at the inner surface of the collar, and a triggering switch is located at the holding unit. Masters can confine pets close to them within the distance of the length of the leash, and trigger the discharge member to discharge high voltage current by triggering the triggering switch. The high voltage current will generate high frequency electrostatic shock at the pet's neck through the electrodes provided at the collar, and thereby stop the pet's inappropriate behaviors. The adopted high voltage low current will not cause any harm to the pets.

The discharge member can be provided either inside the collar or inside the handle. Based on the principle of reasonable structure, it would be better to have it inside the handle. In one preferred embodiment, the discharge member is connected to two electrodes provided at the inner surface of the collar by two wires embedded in the leash. In another preferred embodiment, the discharge member is connected to only one electrode provided at the inner surface of the collar through a single wire embedded in the leash, and in this case the pet's body would be the ground.

The discharge member of the present invention is made of a piezoelectric ceramic material. The pet training device of the present invention further includes a triggering switch at the holding unit, wherein the triggering switch includes a handle, a trigger, and a reset mechanism. The piezoelectric ceramic discharge member does not require batteries, and can be used for over ten thousand times, which guarantees a long service life of the discharge member. Furthermore, the operation of the pet training device is simple. Through holding the holding unit, the master can trigger the triggering switch of the piezoelectric ceramic member to discharge high voltage low current. Afterwards, the triggering switch will be reset by the reset mechanism, and get ready for the next discharge.

Specifically, the holding unit has a squeeze let-go structure. The handle, with a sectional view similar to U-shape, contains sliding guide blocks at its two inner side surfaces corresponding to the sliding grooves on the holding unit. The trigger is a push block corresponding to the pressure block of the piezoelectric ceramic discharge member. The reset mechanism is consisted of guiding poles wrapped around by springs, which correspond to the concaves formed on the base of the holding unit. For convenient and comfortable operation, the handle is formed with finger shape curving surface that consistently fits into a grip.

Another preferred embodiment is to have the handle as a push button installed at a location where can be easily pressed by the thumb when grabbing the holding unit. The trigger will be the base of the push button, and the reset mechanism is also located between the push button and the holding unit. Furthermore, the holding unit provided by the present invention can be made into a grabbing ring without handle; the triggering switch is arranged at the fore end of the outer surface of the grabbing ring.

The electrodes are arranged at the inner surface of the collar at a spot corresponding to the connection of the collar and the leash. When a pet wears the collar of the pet training device, the electrodes will then be closely against the pet's neck so that the electrostatic shock will be effective. The connection between the collar and the leash can also be made into a detachable structure. The electrical connection can be easily disconnected and reconnected. For example, the leash can be disconnected from the collar at home to give pets some liberty of moving, when going outdoors, the leash can be reconnected. The leash of the present invention can also be facilitated with a contraction device, such as a rotating wheel at the holding unit. As such, the wires can still be connected to the electrodes at the collar through the rotating wheel; the length of the leash can be adjusted according to actual needs.

By utilizing the above described electrostatic pet training device, masters can trigger the piezoelectric ceramic member to discharge high voltage low current through the handle of the training device. The current through the electrodes located at the inner surface of the collar will be turned into high frequency electrostatic shock at the pet's neck to restrain the pet from performing bad behaviors, such as barking and pissing in prohibited locations.

After long term usage of the pet training device of the present invention, pets will develop good habits. The training device can also effectively correct pets' bad behaviors. In addition, some dangerous behaviors, such as sudden running or dragging the matter during a walk, can be avoided and, therefore, stumbling accidents resulted from pet's inappropriate behaviors can be avoided.

### DESCRIPTION OF THE DRAWINGS

Figure 1 illustrates the schematic diagram of a preferred embodiment of the present invention;
Figure 2 illustrates the schematic diagram showing the internal structure of the holding unit depicted in Figure 1;
Figure 3 illustrates the schematic diagram showing the holding unit of the preferred embodiment depicted in Figure 2;
Figure 4 illustrates the sectional diagram showing the holding unit of the preferred embodiment depicted in Figure 3;
Figure 5 illustrates the schematic diagram of the upper cover of the holding unit of the preferred embodiment depicted in Figure 1;
Figure 6 illustrates the schematic diagram of the lower cover of the holding unit of the preferred embodiment depicted in Figure 1;
Figure 7 illustrates the schematic diagram of the handle of the holding unit of the preferred embodiment depicted in Figure 1;
Figure 8 illustrates the schematic diagram of a preferred embodiment of the pet training device of the present invention;
Figure 9 illustrates the schematic diagram showing the internal structure of the pet training device depicted in Figure 8;
Figure 10 illustrates the schematic diagram of a preferred embodiment of the training device of the present invention; and
Figure 11 illustrates the schematic diagram showing the internal structure of the preferred embodiment of the pet training device depicted in Figure 10.

### DETAILED DESCRIPTION OF THE INVENTION

The present invention can be further described in details by combining the following attached drawings with the preferred embodiments.

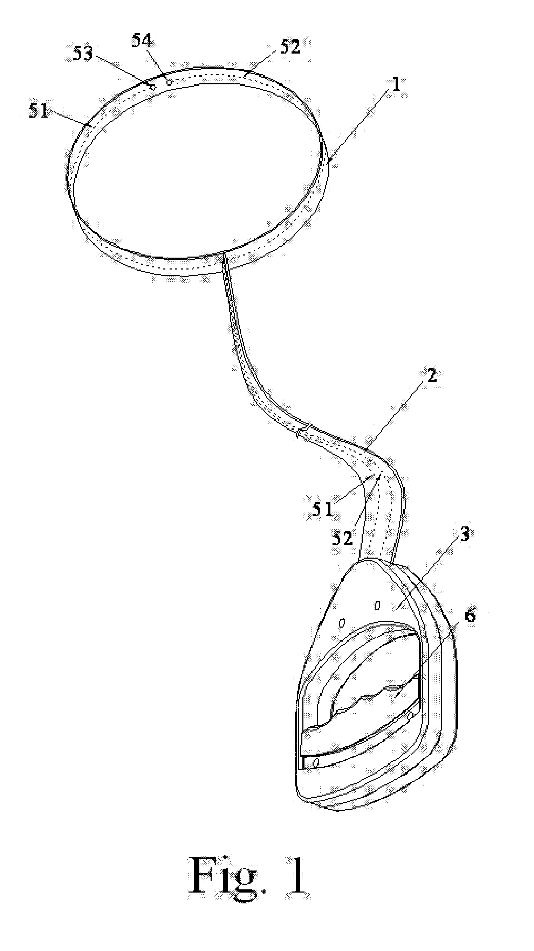

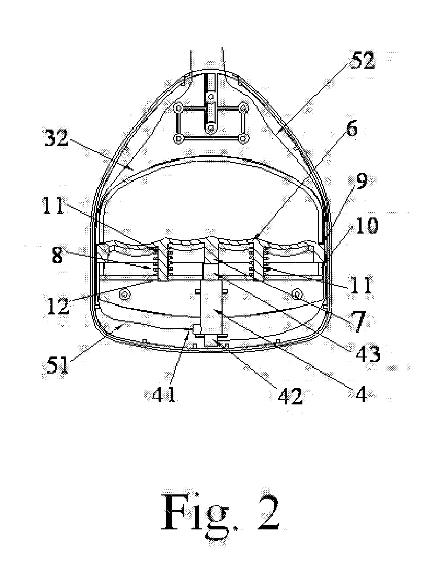

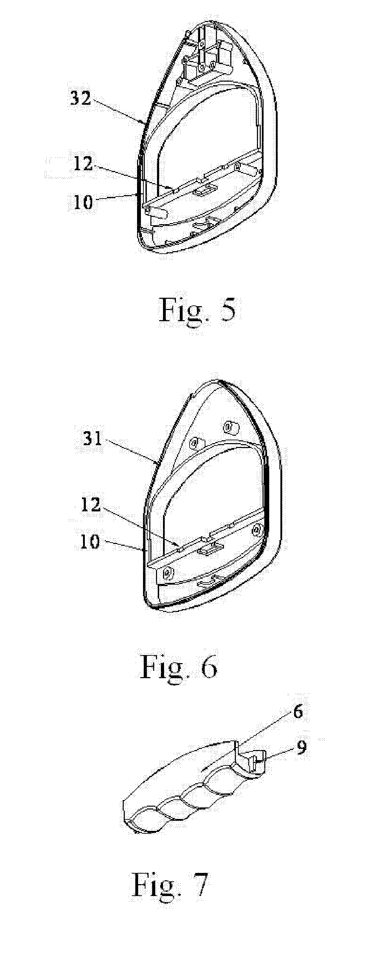

As shown in Figures 1-7, the newly developed pet training device comprises a collar 1, a leash 2 connected to one end of the collar 1, and a holding unit 3 connected to the other end of the leash 2, wherein the holding unit 3 is formed by an upper cover 31 screwed onto a lower cover 32. A piezoelectric ceramic discharge member 4 is provided at the inner fore end of the holding unit 3; the discharge needle 41 and the ground 42 of the piezoelectric ceramic discharge member 4 are respectively connected to wires 51, 52. The wires 51, 52 extended out of the holding unit 3 are embedded in the leash 2, and are connected to electrodes 53, 54 at the collar 1; the leash 2 and the holding unit 3 are integrated together.

A triggering switch including a handle, a trigger, and a reset mechanism is also provided at the holding unit. The handle has a similar U shape. The trigger is provided just above the pressure block 43 of the piezoelectric ceramic member 4. The triggering switch includes a push block 7 provided at the inner bottom of the U-shape handle 6 and sliding guide blocks 9, which are provided at two sides of the U-shape handle 6. The sliding guide blocks 9 correspond to the sliding grooves 10 provided at the inner surface of the upper cover 31 and lower cover 32 for smooth slide of the U-shape handle 6. At the bottom of the inner surface of the U-shape handle 6, guiding poles 11 are symmetrically provided. Inside the handle, concave spots 12 are provided at positions corresponding to the guiding poles 11. The guiding poles 11 are like half circle formed at the upper cover 31 and lower cover 32 respectively. Springs 8 wrap around the guiding poles 11, which helps the reset of the handle 6.

In addition, a curving surface conforming to fingers is formed at the turning portion of the U-shape handle to better fit into a grip for a comfort hold. The positive and negative electrodes 53, 54 are formed at the inner surface of the collar 1. After being worn by a pet, the positive and negative electrodes 53, 54 at the collar will touch the neck of the pet, an approximately 10mm distance will be preserved between the collar 1 and the pet's skin.

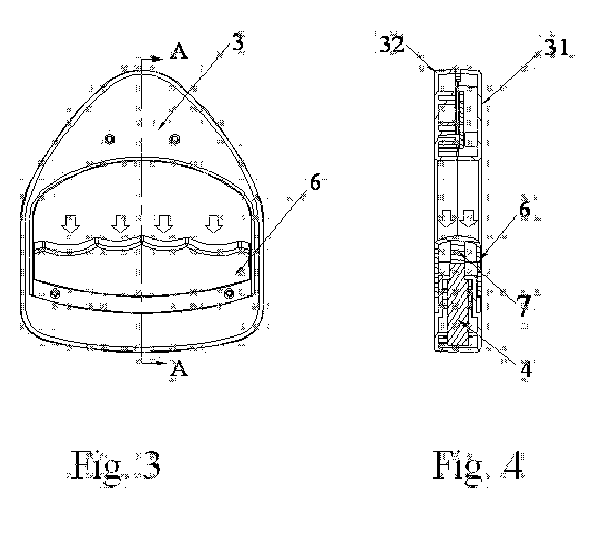

Utilizing the electrostatic pet training device, masters can restrain or stop the pets from acting bad behaviors, such as pissing and barking, by pressuring the handle 6 of the holding unit 3, as shown in Figure 3 and 4 at the arrows direction. The piezoelectric ceramic member 4 is pressed by the push block 7 inside the handle 6. Or, due to the pulling force from the pets, the piezoelectric ceramic discharge member 4 inside the holding unit 3 will exert pressure on the push block 7 at the handle 6. The discharge needle 41 of the piezoelectric ceramic member 4 will then discharge high voltage current. Through the electrodes at the end of the wires at the collar 1, the high voltage current will generate high frequency electrostatic shock at the pet's neck, and thereby restrain the pets from performing bad behaviors. The high voltage current is approximately 15 thousand volts and 10um amp.

Further, with the help of the reset element, the U-shape handle 6 can be automatically reset after the piezoelectric ceramic member 4 being pressed, and get ready for the next triggering. After a long term usage, the pets will develop good habits and bad behaviors will be effectively corrected. Furthermore, the training device of the present invention can prevent stumbling accidents resulted from pet's sudden pulling force during a walk from happening to people, particularly to children and old people.

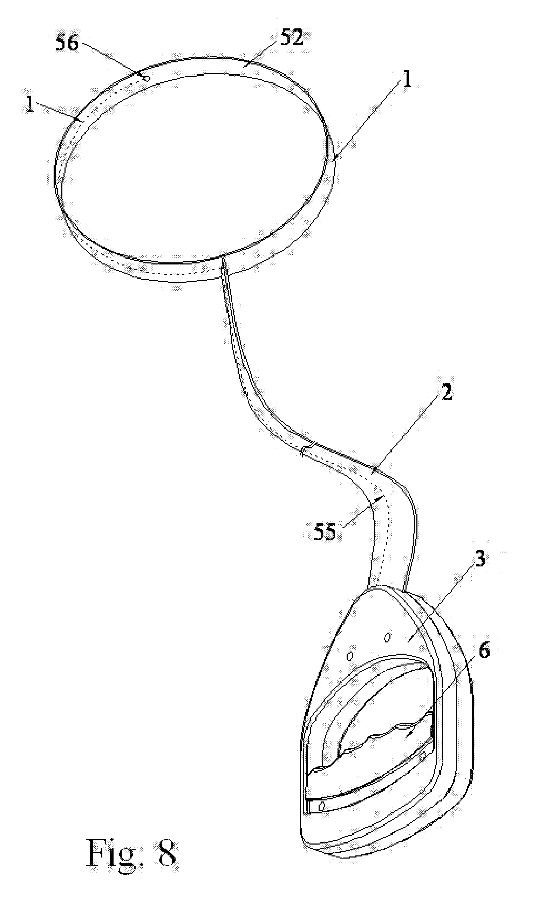

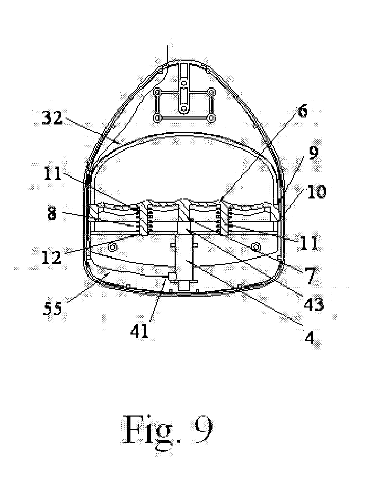

Figure 8 illustrates another preferred embodiment of the present invention. The structure of this preferred embodiment is similar to the preferred embodiment described above. The difference is that the discharge needle 41 of the piezoelectric ceramic member 4 is connected to only one electrode 56 provided at the inner surface of the collar by one wire 55, as shown in Figure 9. The character is that the pet body is used as the ground. After triggering the piezoelectric ceramic member 4 by the U-shape handle 6, the high voltage current discharged by the discharge needle 41 is connected to electrode 56 by a single wire 55, the current flows into the ground. This arrangement can still effectively generate electrostatic shock at the pet's neck.

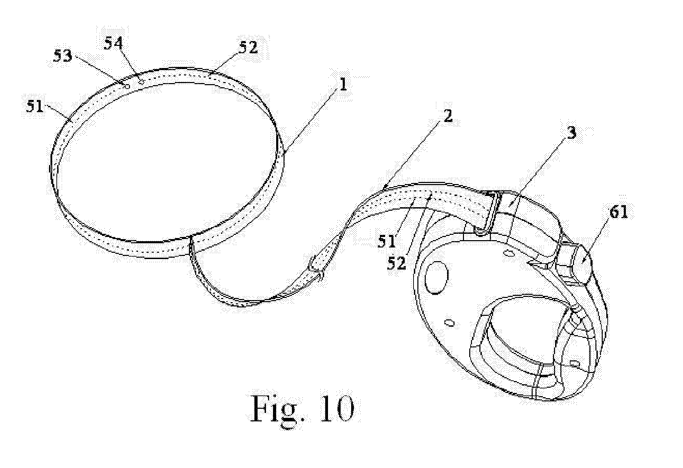

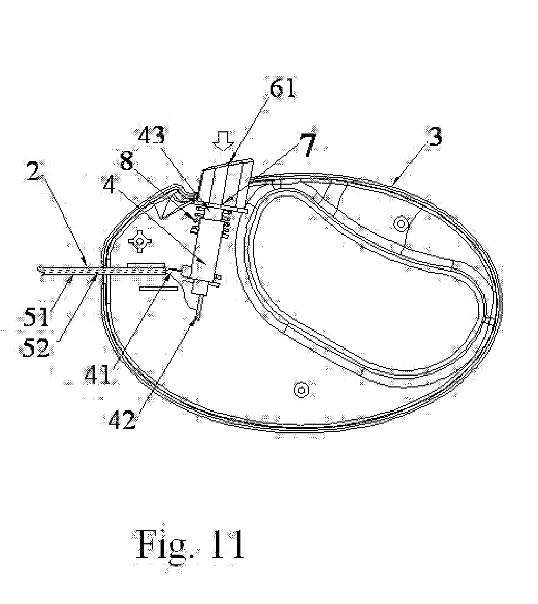

A preferred embodiment with a quite different structure is shown in Figure 10 and Figure 11. The holding unit 3 is a grabbing ring structure, which does not include a handle for comfort grab. The triggering switch has an operation button 61 provided at a spot where can be easily pressed by a thumb, that is at the fore end of the grabbing ring. The trigger is at the bottom of the operation button 61.

The reset mechanism is the spring 8 provided between the holding unit 3 and the operation button 61. The electrical wire connection is similar to the preferred embodiment depicted in Figure 1. This arrangement provides the user a comfortable holding unit 3, and the thumb can freely moving and control the piezoelectric ceramic member for electrostatic discharge.

The present invention may be improved further. The structure between the collar and the leash can be designed into a detachable structure. The leash can be designed as a contraction type of leash, which can be contracted and curled onto a rotating wheel inside the holding unit. The wires can also connect to the piezoelectric ceramic member through the rotating wheel.

Although the present invention has been described in certain preferred embodiments, many modifications and variations would be apparent to those skilled in the art. It is therefore understood that the present invention may be practiced otherwise than as specifically described herein. Hence, those preferred embodiments described in the present invention should be considered in all respects as illustrative and not restrictive.

## Claims

1. A pet training device comprises:
a collar;
a leash connected to one end of the collar;
a holding unit coupled with a triggering switch connected to another end of the collar;
a discharge member capable of discharging high voltage low current; and
a plurality of electrodes provided at the inner surface of the collar, wherein the electrodes are connected to the discharge member.

2. The pet training device as claimed in claim 1, wherein the discharge member is provided at the holding unit and connected to the electrodes at the inner surface of the collar by a plurality of wires embedded in the leash.

3. The pet training device as claimed in claim 1, wherein the discharge member is provided at the holding unit and connected to the electrodes at the inner surface of the collar by a wire embedded in the leash.

4. The pet training device as claimed in claim 1, wherein the discharge member is made of piezoelectric ceramic materials; and the triggering switch further comprises a handle, a trigger, and a reset mechanism.

5. The pet training device as claimed in claim 4, wherein the holding unit is a grabbing ring structure; the handle is at the inner surface of the grabbing ring having sliding mechanism; and the trigger and reset mechanism are inside the holding unit.

6. The pet training device as claimed in claim 5, wherein the sectional view of the handle is similar to a U-shape; a plurality of sliding guide blocks are provided at two sides of the handle corresponding to a plurality of sliding grooves provided at the holding unit; the trigger is a push block corresponding to a pressure block of the piezoelectric ceramic member; and the reset mechanism is formed by a plurality of guiding poles wrapped with springs corresponding to a plurality of concaves at the holding unit.

7. The pet training device as claimed in claim 6, wherein a curving surface conforming to fingers is formed at the turning portion of the U-shape handle.

8. The pet training device as claimed in claim 4, wherein the handle is a button provided at a spot where the button can be pressed easily by a thumb while grabbing the holding unit; the trigger is at the bottom of the button; and the reset mechanism is a spring provided between the button and the holding unit.

9. The pet training device as claimed in claim 8, wherein the holding unit is a grabbing ring structure with a curing surface for comfortable hold; and the trigger is at the outer surface of the holding unit and the fore end of the grabbing ring.

10. The pet training device as claimed in claim 1, wherein the plurality of electrodes are arranged at the inner surface of the collar at a spot corresponding to the connection of the collar and the leash.

11. The pet training device as claimed in claim 1, wherein the connection between the collar and the leash is detachable.

12. The pet training device as claimed in claim 1, wherein the leash can be contracted and curled onto a rotating wheel inside the holding unit; and a plurality of wires are connected to the plurality of electrodes through the rotating wheel.
